Europäisches Patentamt

(19) European Patent Office

Office européen des brevets

(11) Veröffentlichungsnummer: **0 162 277**
**B1**

(12) **EUROPÄISCHE PATENTSCHRIFT**

(45) Veröffentlichungstag der Patentschrift:
**14.06.89**

(21) Anmeldenummer: **85104536.9**

(22) Anmeldetag: **15.04.85**

(51) Int. Cl.⁴: **B 26 B 19/12,** B 26 B 19/02,
F 16 J 3/04, F 16 J 15/52

(54) Dichtung für einen Trockenrasierapparat.

(30) Priorität: **21.04.84 DE 3415124**

(43) Veröffentlichungstag der Anmeldung:
**27.11.85 Patentblatt 85/48**

(45) Bekanntmachung des Hinweises auf die Patenterteilung:
**14.06.89 Patentblatt 89/24**

(84) Benannte Vertragsstaaten:
**AT BE CH DE FR GB IT LI LU NL SE**

(56) Entgegenhaltungen:
**DE-A- 2 904 300**
**DE-B- 1 065 298**
**FR-A- 2 448 667**
**FR-A- 2 494 802**
**GB-A- 1 168 943**

(73) Patentinhaber: **Braun Aktiengesellschaft,**
**Rüsselsheimer Strasse 22, D-6000 Frankfurt/Main (DE)**

(72) Erfinder: **Schweingruber, Otto, Höhenblick 1,**
**D-6246 Glashütten (DE)**

(74) Vertreter: **Einsele, Rolf, Braun Aktiengesellschaft**
**Postfach 1120 Frankfurter Strasse 145, D-6242 Kronberg**
**Taunus (DE)**

## Beschreibung

Die Erfindung betrifft einen Trockenrasierapparat mit einem hin- und herschwingenden Klingenblock, einmal als Schwinghebel ausgebildeten Antriebsorgan, einem das Antriebsorgan mit dem Klingenblock verbindenden Kupplungsstück und einer das Apparateinnere gegenüber dem Scherbereich abschirmenden, topfförmigen Dichtung, durch die das Antriebsorgan hindurchragt, wobei die topfförmige Dichtung aus einem flexiblen Hohlkörper gebildet ist und die Dichtung einerseits an der Gehäusewand und andererseits an dem Antriebsorgan formschlüssig gehalten ist.

Es ist bekannt, zur Abdichtung der Durchlassöffnung für das den Klingenblock unterhalb der apparatefesten Scherfolie in hin- und herschwingende Bewegung versetzende Antriebsorgan – vorzugsweise den Schwinghebel eines Schwingankermotors – ein dieses Antriebsorgan, also den Schwinghebel umschliessendes, auf eine den gesamten Antrieb aufnehmenden Innenraum des Apparatekörpers vom Scherbereich trennende Gehäusewandung auflegbares, flaches Schaumgummipolster vorzusehen, dessen Dichtfunktion jedoch infolge seiner porösen Struktur und seiner relativ schnellen Alterung äusserst begrenzt ist. Daneben wirkt sich noch die nur lose Auflage dieses Schaumgummipolsters auf der Gehäusewandung des Apparatekörpers nachteilig auf die eigentliche Funktion dieser Dichtung aus.

Diesem Mangel soll nun insbesondere eine topfförmig ausgebildete Dichtung abhelfen, die – mit ihrem Aussenrand an der das Apparateinnere vom Scherbereich des Trockenrasierapparates trennenden Gehäusewandung des Apparatekörpers befestigt – mit ihrem umgebördelten Innenrand den Schwinghebel umgibt, jedoch nicht an ihm befestigt ist. Auch diese Dichtung bewirkt kein ausreichendes Abdichten des die gegen Verschmutzung empfindlichen Antriebs- und Schaltorgane enthaltenden Innenraumes des Apparatekörpers vor dem Eindringen des bei jeder Rasur anfallenden, äusserst feinen Rasierstaubes.

Mit den gleichen Mängeln ist schliesslich eine topfförmige Schwinghebeldichtung behaftet, die – ebenfalls nur einseitig, also mit ihrem Aussenrand oder mit ihrem Innenrand an der das Apparateinnere vom Scherbereich trennenden Gehäusewand bzw. am Schwinghebel befestigt – mit ihrem jeweils verbleibenden Innen- bzw. Aussenrand ohne jegliche Festlegung sich lediglich gegen den Umfang des Schwinghebels oder die dem Scherbereich des Trockenrasierapparates zugewandten Seite der gehäuseseitigen Trennwand des Apparatekörpers abstützt.

Ein Trockenrasierapparat der eingangs genannten Art ist aus der DE-A 2 904 300 bekannt. Die bei diesem Gerät vorgesehene Dichtung erstreckt sich, ausgehend von der Befestigung an einer elastisch gelagerten Platte, bis zur Anlage am Schwinghebel von der Platte weg in Richtung des Klingenblockes. Bedingt durch diese Formgebung ist die Dichtung dem vom Schwingantrieb ausgehenden Walkprozess in vollem Umfang ausgesetzt und unterliegt sonach hohen mechanischen Beanspruchungen.

Aus der FR-A 2 494 802 ist eine Faltenbalgdichtung für eine homokinetische Gelenkverbindung bekannt. Sämtliche Konuswinkel der stufenförmigen Abschnitte der Faltenbalgdichtung sind zu der durch die Faltenbalgdichtung verlaufenden Mittenachse hin ausgerichtet. Die Scheitelpunkte der Konuswinkel liegen in durch die jeweilige Winkelgrösse vorgegebenen Abständen zueinander innerhalb des Faltenbalges auf der Mittenachse.

Aufgabe der Erfindung ist es, eine Dichtung für ein Gerät der eingangs genannten Art zu schaffen, die ein praktisch vollkommenes Abdichten des den apparateseitigen Antrieb enthaltenden Innenraumes des Apparatekörpers gegen eindringenden Rasierstaub gewährleistet und die den hohen mechanischen Belastungen, denen eine Dichtung beim Gebrauch eines Trockenrasierapparates ausgesetzt ist, dauerhaft standhält.

Nach der Erfindung wird diese Aufgabe bei einem Gerät der eingangs genannten Art dadurch gelöst, dass die topfförmige Dichtung mindestens einen stufenförmigen Abschnitt aufweist, der als sich in Richtung der Schwenkachse des Antriebsorgans verjüngender Konus ausgebildet ist, wobei der Scheitelpunkt des Konuswinkels des Abschnittes im wesentlichen auf der Schwenkachse des Antriebsorganes liegt.

Mit einer derart gestalteten, sowohl an der abschliessenden bzw. trennenden Gehäusewandung als auch am Schwenkhebel festgelegten topfförmigen Dichtung, wird eine optimale Abdichtung des Apparateinneren gegenüber dem Scherbereich des erfindungsgemässen Trockenrasierapparates erzielt. Der stufenförmig abgesetzte Abschnitt der topfförmigen Dichtung, der als sich in Richtung zur Schwenkachse des Schwinghebels verjüngender Konus ausgebildet ist, gewährleistet eine geringstmögliche mechanische Belastung des Dichtmaterials infolge einer Verminderung der ihr beim Betrieb des Trockenrasierapparates vom Schwinghebel aufgezwungenen Walkarbeit.

Diese Ausgestaltung der Dichtung bewirkt neben der geringfügigen mechanischen Belastung des Dichtkörpers infolge der Beschränkung des Walkprozesses auf sein stufenförmig abgesetztes Teilstück noch einen äusserst geringen Leistungsbedarf seitens des apparateseitigen Antriebs, was sich bei Trockenrasierapparaten mit eigener Stromquelle hinsichtlich der Gebrauchszeit seiner jeweils zur Verwendung kommenden Primär- oder Sekundärelemente besonders günstig auswirkt.

Nach empirischen Ermittlungen ergibt diese spezielle konische Gestaltung des stufenförmig abgesetzten Abschnittes der Schwinghebeldichtung die besten Ergebnisse hinsichtlich der ihr abzufordernden Walkleistung, da gerade der konisch ausgebildete und überdies dem Schwenkwinkel des Schwinghebels entsprechende Mantel dieser Stufe der Dichtung sich im besonderen Masse dem ihr aufgezwungenen Walkprozess anpasst.

Nach einer weiteren Ausführungsform der Erfindung weist die topfförmige Dichtung mehrere konusförmige Abschnitte auf, deren Scheitelpunkt des jeweiligen Konuswinkels auf der Schwenkachse des Antriebsorganes liegt.

Eine leichte Montage und dem problemlosen Austausch dienende Demontage der Schwinghebeldichtung des erfindungsgemässen Trockenrasierapparates ist dadurch gewährleistet, dass die durch die Durchlassöffnung gebildete Ringwand der Dichtung in eine Ringnut des Antriebsorgans und die durch die Durchlassöffnung gebildete Ringwand der Dichtung in eine Ringnut an der Gehäusewand eingreift. Vorzugsweise sind die Ringwände der Dichtung wulstartig ausgebildet.

Der Gegenstand der Erfindung ist nachstehend anhand der Zeichnung in einem Ausführungsbeispiel näher erläutert. Es zeigen:

Fig. 1 die in Ruhestellung verharrende, topfförmige Schwinghebeldichtung eines Trockenrasierapparates im Längsschnitt und

Fig. 2 die topfförmige Schwinghebeldichtung in ihrer Walkarbeit erfordernden Arbeitsstellung, ebenfalls im Längsschnitt.

Wie ersichtlich, handelt es sich beim Gegenstand der Erfindung um eine Dichtung für einen Trockenrasierapparat mit einem durch einen Schwinghebel 1 hin- und herbewegten Klingenblock, der mit einer darüber gespannten Scherfolie zusammenwirkt, die fester Bestandteil eines apparateseitigen, beispielsweise auf den Apparatekörper aufsetzbaren Scherkopfes ist.

Ein solcher Schwinghebel wird üblicherweise angetrieben von einem an sich bekannten Schwingankermotor, dessen Anker er beispielsweise selbst bildet. Ebenso ist es – insbesondere bei grossvolumigen Trockenrasierapparaten – möglich, den Schwinghebel als einen lediglich Übertragungsfunktion ausübenden doppelarmigen Hebel zu konzipieren und ihn an seinem dem Scherkopf abgewandten Ende vom Schwingankermotor oder aber – insbesondere bei Trockenrasierapparaten mit Gleichstromspeisung durch Primär- oder Sekundärzellen – von einem auf der rotierenden Antriebswelle eines Gleichstrommotors sitzenden Exzenterbetrieb antreiben, d. h. in hin- und herschwingende Bewegung versetzen zu lassen.

Der Schwinghebel 1 des Tockenrasierapparates ist nach alledem im den gesamten Antrieb und meist auch die erforderlichen Schaltelemente aufnehmenden Innenraum 2 des Apparatekörpers gelagert. Er ragt mit seinem dem Scherkopf zugewandten Ende in den Scherbereich 3 des Trockenrasierapparates hinein, in dem er – üblicherweise mittels einer Kupplung – an dem Untermesser angreift, um diesen in seine unterhalb der apparatefesten Scherfolie hin- und herschwingende Längsbewegung zu versetzen.

Der Scherbereicht 3 ist nun gegenüber dem Innenraum 2 des Trockenrasierappartes durch eine insbesondere staubabweisende Dichtung abgeschirmt, die das Eindringen von im Scherbereich, also innerhalb des Scherkopfes beim Rasieren stets anfallendem Rasierstaub in den die Antriebs- und Schaltelemente enthaltenden Innenraum 2 des Apparatekörpers verhindern soll.

Diese hier topfförmige Dichtung 4 bildet einen axial stufenförmig abgesetzten Hohlkörper mit zwei minteinander fluchtenden Durchlassöffnungen 5 und 6. Von diesen dient die enge Öffnung 5 zur Aufnahme des Schwenkhebels 1 und die weite Öffnung 6 zum Ansetzen der Dichtung an eine den Innenraum 2 des Apparatekörpers vom Scherbereich 3 trennende Gehäusewandung 7.

Der Gehäusewandung 7 ist hierzu ein Lagerauge 8 angeformt, das zum Durchtritt des Schwinghebels 1 dient und das umfangseitig eine Ringnut 9 aufweist, in die eine die weite Durchlassöffnung 6 für den Schwinghebel 1 bildende Innenwulst 10 der Dichtung 4 abdichtend eingreift. Zum abdichtenden Festlegen der Dichtung 4 am Schwinghebel 1 ist auch die enge Durchlassöffnung 5 von einer ihrer oberen Stirnwandung angeformten Wulst 11 gebildet, die elastisch, also unter Vorspannung in eine umfangseitige Ringnut 12 des Schwinghebels 1 eingreift und sonach ein abdichtendes Festlegen der Dichtung am Schwenkhebel 1 sichert.

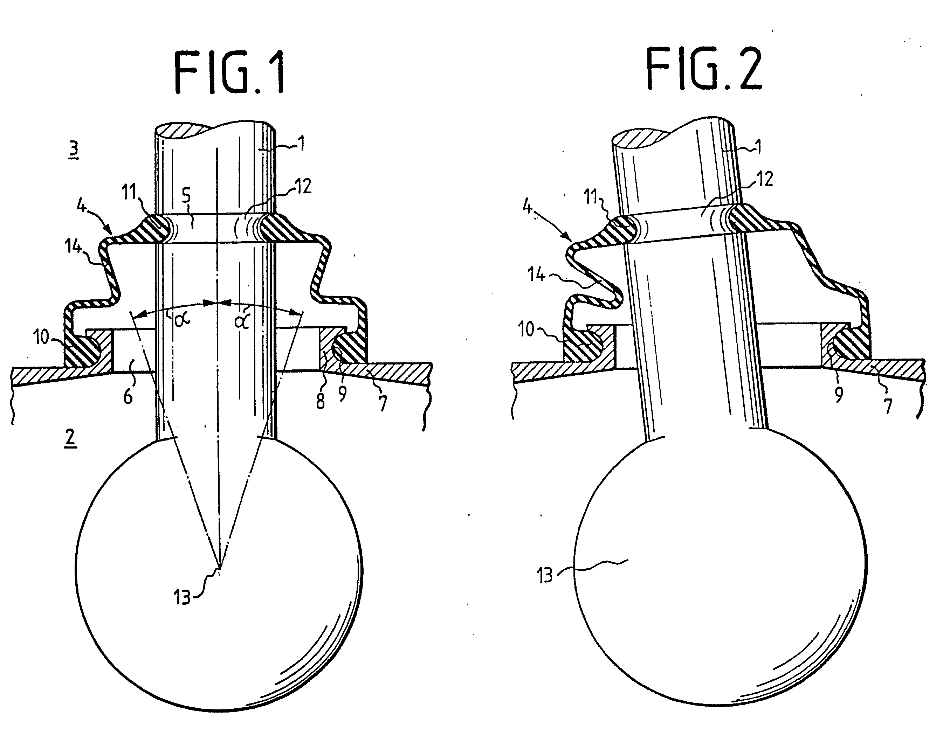

Der Schwinghebel 1 ist hier – wie in den Figuren angedeutet – um eine Achse 13 schwenkbar und wird beispielsweise mittels seines nicht mehr sichtbaren unteren Hebelarmes von einem an diesen angreifenden Anker eines Schwingankermotors angetrieben, d. h. in Schwenkbewegung versetzt. Der Schwinghebel schwenkt hierbei um den Winkel α beidseitig aus seiner in Fig. 1 dargestellten Null- bzw. Ruhestellung heraus. Bei diesem Verschwenken wird auch die Dichtung 4 mitgenommen und diese dabei – da mit ihren beiden Durchlassöffnungen 5 und 6 am Schwinghebel und am Apparatekörper festgelegt – entsprechend verformt. Dieses Verformen der Dichtung 4 geschieht beim erfindungsgemässen Trockenrasierapparat jedoch nur im Bereich des stufenförmig abgesetzten Abschnittes 14 des von ihr gebildeten elastischen Hohlkörpers. Dieser sonach den dynamischen Teil der Dichtung 4 bildende Abschnitt 14 ist möglichst nahe – so dicht wie zum Erhalt der Elastizität möglich – dem Umfang des Schwinghebels 1 angenähert, um die sich beim Verschwenken des Schwinghebels verformende und demnach Walkarbeit leistende Masse der Dichtung 1 gering zu halten, woraus ein relativ geringer vom apparateseitigen Antrieb aufzubringender Leistungsaufwand für das Verformen der so konzipierten Dichtung resultiert.

Der stufenförmig abgesetzte Abschnitt 14 der Dichtung 4 kann – wie durch die strichpunktierten Linien in Fig. 1 angedeutet – zylindrisch ausgebildet sein. Von besonderem Vorteil hinsichtlich der Erzielung einer wenig Leistungsaufwand erfordernden Walkarbeit und – darüber hinaus – eines verschleissarmen Verformens der Dichtung ist es jedoch, wenn der Abschnitt 14 konisch verläuft, wobei der Konuswinkel dieses Ab-

schnitts dem Schwenkwinkel α des Schwinghebels 1 aus seiner Null- bzw. Ruhestellung heraus entspricht.

Wie aus Fig. 2 ersichtlich, beschränkt sich infolge dieser Ausbildung das Walken der Dichtung 4 lediglich auf den den dynamischen Teil der Dichtung bildenden Umfangsbereich des Abschnittes 14. Dieser dynamische Teil ist sonach auf ein relativ kleines Teilstück der gesamten Dichtung reduziert, der darüber hinaus so dicht wie möglich an den Umfang des Schwinghebels gelegt ist, so dass die beim Betrieb des Trockenrasierapparates Walkarbeit ausführende Masse möglichst klein gehalten wird, woraus – wie bereits erwähnt – ein relativ geringer zusätzlicher Leistungsbedarf für das funktionsgerechte Verformen der Dichtung durch den den Klingenblock antreibenden Schwinghebel resultiert, was sich bei Trockenrasierapparaten mit eigener Stromquelle besonders günstig – da die Betriebsdauer der Primär- oder Sekundärzellen verlängernd – auswirkt.

Gemäss Fig. 2 verformt sich infolge des Walkens derjenige Teil des Umfangs des Abschnittes 14 der Dichtung 4 mäanderförmig, der im ihm zugewandten Neigungsbereich des Schwinghebels 1 liegt, wogegen der im ihm abgewandten Neigungsbereich des Schwinghebels, also jeweils gegenüberliegende Teil dieses Umfangs gestreckt wird.

Es liegt im Rahmen der Erfindung, die vorstehend offenbarte topfförmige Dichtung zwischen Schwinghebel und Gehäuseinnerem mit gleichem Erfolg auch solchen Trockenrasierern zuzuordnen, die anstelle eines Klingenblockes andere, beispielsweise kammförmige hin- und herschwingende und mit gleichartigen apparatefesten Scherelementen im Schersinne zusammenwirkende Scherelemente enthalten.

Bezugszeichenliste
1  Schwinghebel des Trockenrasierapparates für den Klingenblock
2  Innenraum des Apparatekörpers (Apparateinnere)
3  Scherbereich des Trockenrasierapparates
4  Dichtung für 1 zwischen 2 und 3
5  (enge) Durchlassöffnung von 4 für 1
6  (weite) Durchlassöffnung von 4 für 1
7  Gehäusewandung zwischen 2 und 3
8  Lagerauge an 7 für 4
9  Ringnut am Umfang von 8 für 4 (10)
10  Innenwulst (Abdichtring) an 4 (in Eingriff mit 9)
11  Innenwulst (Abdichtring) an 4 (in Eingriff mit 12)
12  Ringnut am Umfang von 1 für 4 (11)
13  Schwenkachse von 1
14  stufenförmig abgesetzter Abschnitt von 4
α  Schwenkwinkel von 1 aus Nullstellung (entspricht Konuswinkel von 14)

## Patentansprüche

1. Trockenrasierapparat mit einem hin- und herschwingenden Klingenblock, einem als Schwinghebel ausgebildeten Antriebsorgan (1), einem das Antriebsorgan (1) mit dem Klingenblock verbindenden Kupplungsstück und einer das Apparateinnere gegenüber dem Scherbereich abschirmenden topfförmigen Dichtung (4), durch die das Antriebsorgan (1) hindurchragt, wobei die topfförmige Dichtung (4) aus einem flexiblen Hohlkörper gebildet ist und die Dichtung (4) einerseits an der Gehäusewand (7) und andererseits an dem Antriebsorgan (1) formschlüssig gehalten ist, dadurch gekennzeichnet, dass die topfförmige Dichtung (4) mindestens einen stufenförmigen Abschnitt (14) aufweist, der als sich in Richtung zur Schwenkachse (13) des Antriebsorgans (1) verjüngender Konus ausgebildet ist, wobei der Scheitelpunkt des Konuswinkels (α) des Abschnittes (14) im wesentlichen auf der Schwenkachse (13) des Antriebsorgans (1) liegt.

2. Trockenrasierapparat nach Anspruch 1, dadurch gekennzeichnet, dass die topfförmige Dichtung (4) mehrere konusförmige Abschnitte (14) aufweist, deren jeweiliger Konuswinkel (α) durch die Schwenkachse (13) des Antriebsorgans (1) verläuft.

3. Trockenrasierapparat nach einem der Ansprüche 1 bis 2, dadurch gekennzeichnet, dass der Konuswinkel (α) des Abschnittes (14) dem Schwenkwinkel des Antriebsorganes (1) entspricht.

4. Trockenrasierapparat nach einem der vorhergehenden Ansprüche, dadurch gekennzeichnet, dass die durch die Durchlassöffnung (5) gebildete Ringwand (11) der Dichtung (4) in eine Ringnut (12) des Antriebsorgans (1) und die durch die Durchlassöffnung (6) gebildete Ringwand (10) der Dichtung (4) in eine Ringnut (9) an der Gehäusewand (7) eingreift.

5. Trockenrasierapparat nach einem der vorhergehenden Ansprüche, dadurch gekennzeichnet, dass die durch die Durchlassöffnung (5) gebildete Ringwand (11) der Dichtung (4) in eine Ringnut im Kupplungsstück des Antriebsorgans (1) und die durch die Durchlassöffnung (6) gebildete Ringwand (10) der Dichtung (4) in eine Ringnut (9) an der Gehäusewand (7) eingreift.

6. Trockenrasierapparat nach einem der vorhergehenden Ansprüche, dadurch gekennzeichnet, dass die Ringwände (10 und 11) wulstartig ausgebildet sind.

7. Trockenrasierapparat nach einem der vorhergehenden Ansprüche, dadurch gekennzeichnet, dass die Durchlassöffnungen (5 und 6) der Dichtung (4) unterschiedliche Durchmesser aufweisen.

## Claims

1. A dry shaving apparatus having a reciprocating cutter assembly, a driving member (1) constructed as an oscillating lever, a coupling means connecting said driving member (1) with said cutter assembly, and a cupshaped seal (4) which seals off the body interior against the shaving area and has said driving member (1) extend therethrough, with said cup-shaped seal (4) being formed of a flexible hollow body and having its respective seal ends held in positive engagement with a casing wall (7) and said driving member (1), respectively, characterized in that said cup-shaped seal (4) includes at least one stepped section (14) which is constructed as a cone tapering in the direction of the pivot axis (13) of said driving member (1), with the vertex of the cone angle (α) of said section (14) lying substantially on said pivot axis (13) of said driving member (1).

2. The dry shaving apparatus as claimed in claim 1, characterized in that said cup-shaped seal (4) includes several conical sections (14) having their respective cone angles (α) extend through said pivot axis (13) of said driving member (1).

3. The dry shaving apparatus as claimed in any one of the claims 1 to 2, characterized in that the cone angle (α) of said section (14) corresponds to the pivot angle of said driving member (1).

4. The dry shaving apparatus as claimed in any one of the preceding claims, characterized in that the annular wall (11) of said seal (4) formed by the passageway (5) engages into an annular groove (12) of said driving member (1), and that the annular wall (10) of said seal (4) formed by the passageway (6) engages into a annular groove (9) in the casing wall (7).

5. The dry shaving apparatus as claimed in any one of the preceding claims, characterized in that the annular wall (11) of said seal (4) formed by the passageway (5) engages into an annular groove in the coupling means of said driving member (1), and that the annular wall (10) of said seal (4) formed by the passageway (6) engages into an annular groove (9) in the casing wall (7).

6. The dry shaving apparatus as claimed in any one of the preceding claims, characterized in that said annular walls (10 and 11) are shaped in the manner of a torus.

7. The dry shaving apparatus as claimed in any one of the preceding claims, characterized in that said passageways (5 and 6) of said seal (4) have different diameters.

## Revendications

1. Appareil de rasage à sec comprenant un bloc de lames qui oscille en va-et-vient, un organe d'entraînement (1) réalisé sous la forme d'un levier oscillant, une pièce d'accouplement reliant l'organe d'entraînement (1) au bloc de lames et un joint d'étanchéité (4) en forme de pot, qui protège l'intérieur de l'appareil par rapport à la zone de rasage et à travers lequel l'organe d'entraînement (1) fait saillie, le joint d'étanchéité en forme de pot (4) étant constitué d'un corps creux flexible et le joint d'étanchéite (4) étant maintenu, par une liaison due à la forme, d'un côté sur la paroi du boîtier (7) et de l'autre côté sur l'organe d'entraînement (1), caractérisé en ce que le joint d'étanchéité en forme de pot (4) présente au moins une section en forme de gradin (14), qui est réalisée sous la forme d'un cône qui se rétrécit en direction de l'axe de pivotement (13) de l'organe d'entraînement (1), le sommet de l'angle du cône (α) de la section (14) se trouvant sensiblement sur l'axe de pivotement (13) de l'organe d'entraînement (1).

2. Appareil de rasage à sec suivant la revendication 1, caractérisé en ce que le joint d'étanchéité en forme de pot (4) présente plusieurs sections en forme de cône (14) dont l'angle de cône respectif (α) passe par l'axe de pivotement (13) de l'organe d'entraînement (1).

3. Appareil de rasage à sec suivant l'une des revendications 1 et 2, caractérisé en ce que l'angle de cône (α) de la section (14) correspond à l'angle de pivotement de l'organe d'entraînement (1).

4. Appareil de rasage à sec suivant l'une des revendications précédentes, caractérisé en ce que la paroi annulaire (11) du joint d'étanchéité (4) formée par l'ouverture de passage (5), s'engage dans une rainure annulaire (12) de l'organe d'entraînement (1) et la paroi annulaire (10), formée par l'ouverture de passage (6), du joint d'étanchéité (4) dans une rainure annulaire (9) de la paroi du boîtier (7).

5. Appareil de rasage à sec suivant l'une des revendications précédentes, caractérisé en ce que la paroi annulaire (11), formée par l'ouverture de passage (5), du joint d'étanchéité (4) s'engage dans une rainure annulaire de la pièce d'accouplement de l'organe d'entraînement (1) et la paroi annulaire (10), formée par l'ouverture de passage (6), du joint d'étanchéité (4) dans une rainure annulaire (9) de la paroi du boîtier (7).

6. Appareil de rasage à sec suivant l'une des revendications précédentes, caractérisé en ce que les parois annulaires (10 et 11) sont réalisées à la manière de bourrelets.

7. Appareil de rasage à sec suivant l'une des revendications précédentes, caractérisé en ce que les ouvertures de passage (5 et 6) du joint d'étanchéité (4) présentent des diamètres différents.

# FIG.1

# FIG.2

EP 0 162 277 B1